# EUROPEAN PATENT APPLICATION

(11) **EP 4 644 477 A1**
(43) Date of publication of application: **05.11.2025**
(21) Application number: 25169404.8
(22) Date of filing: 09.04.2025
(51) Int. Cl.: C08K 7/14, B60G 11/26, B60G 11/27, F16F 9/02, F16F 9/05

(54) **POLYKETONE MATERIAL FOR AIR SPRING PISTON**

(30) Priority: 03.05.2024 US 202463642028 P
(71) Applicant: ContiTech Deutschland GmbH, 30175 Hannover (DE)
(72) Inventor: Ramirez Rodriguez, Carlos Antonio, 78395 San Luis Potosí (MX); Noriega Monge, Claudia Raquel, 78395 San Luis Potosí (MX); Alvarado Alvarado, J Felix, 78395 San Luis Potosí (MX); Gamboa Torres, Guillermo, 78395 San Luis Potosí (MX)
(74) Representative: Preusser, Andrea

(57) **Abstract**

An air spring includes a piston and a bellows operably attached to the piston, the piston having a main piston body, wherein at least a majority of an overall polymer content of the main piston body is formed from polyketone material.

## Description

### TECHNICAL FIELD

The present disclosure relates generally to air springs, and more particularly to an air spring piston formed from polyketone material.

### BACKGROUND

Air springs are used as suspension components on a variety of machines or vehicles, such as buses, commercial trucks, or trailers. An air spring generally includes a column of gas confined within a chamber that is formed by a flexible bellows. The compressibility of the confined gas and its gas pressure provide a force medium that serves as a spring as the bellows expands and contracts during use. Generally, the flexible bellows carries only a portion of the load, with the column of confined gas providing most of the support. This allows the air spring to carry significant loads while also providing a desired elasticity for use in the suspension system.

One specific type of air spring is a rolling lobe variety which includes a rigid piston attached to the flexible bellows. The piston is operably coupled to a part of the machine or vehicle requiring suspension, which is in turn supported by the column of confined air. As the flexible bellows deforms during use, the bellows can roll along the piston's outer surface helping to distribute force and improving durability.

### SUMMARY

Conventional rolling lobe air springs generally use metal or polyamide material for forming the piston of the air spring. This may include polyamides such as PA 6 or PA 66, for example. A problem with polyamide material, however, is that it is considered a high global warming potential (GWP) material because its production involves the generation of greenhouse gases such as carbon dioxide (CO₂) and nitrogen oxides (NOx).

Polyketone materials are considered a more eco-conscious material than polyamide due to its reduced environmental impact during its production process. For example, polyketone materials are derived from the polymerization reaction between carbon monoxide and one or more olefins (e.g., ethylene and/or propylene), and have significantly lower greenhouse gas emissions compared to other conventional materials such as polyamide. The polyketone material also may have properties that are similar or superior to polyamide material. For example, polyketone materials, and in particular fiber-reinforced polyketone materials, may have good tensile strength and excellent impact resistance. Polyketone materials also can be manufactured using similar processes to polyamide, such as by injection molding techniques.

Accordingly, at least one aspect of the present disclosure solves one or more problems of conventional air springs that use a polyamide or other high-GWP material for the piston by partially or fully replacing the high-GWP material with polyketone material instead.

More particularly, at least one aspect of the present disclosure provides an air spring comprising a piston and a bellows operably attached to the piston, in which at least a majority of the overall polymer content of the main piston body is formed from polyketone material, such as high-impact resistant fiber-reinforced polyketone material.

The following description and the annexed drawings set forth certain illustrative embodiments according to the present disclosure. These embodiments are indicative, however, of but a few of the various ways in which the principles of the invention may be employed. Other objects, advantages and novel features according to aspects of the present disclosure will become apparent from the following detailed description when considered in conjunction with the drawings.

### BRIEF DESCRIPTION OF THE DRAWINGS

The annexed drawings, which are not necessarily to scale, show various embodiments according to the present disclosure.

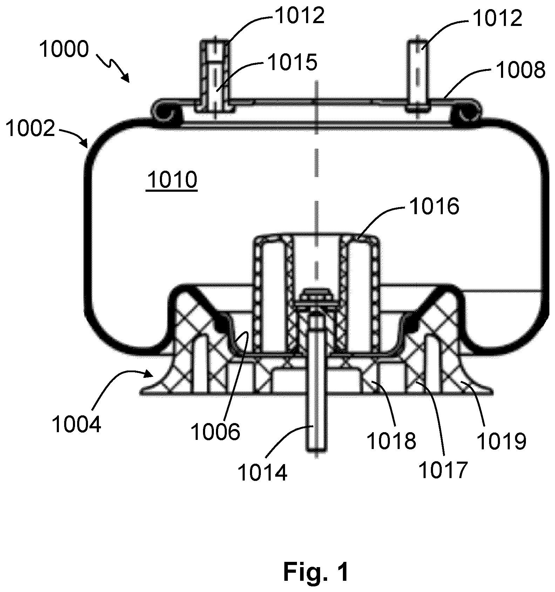

Fig. 1 illustrates an exemplary air spring having a bellows and a piston in which the main piston body includes a polyketone material.

### DETAILED DESCRIPTION

Referring to Fig. 1, an exemplary air spring 1000 is shown. The air spring 1000 is a rolling lobe type air spring that includes a flexible bellows 1002 operably attached to a rigid piston 1004. As shown, the bellows 1002 may be sealingly coupled to the piston 1004 with a bottom plate or retainer 1006. A top portion of the bellows 1002 may be sealed with a top plate or cover 1008. The sealable coupling of the bottom plate 1006 and/or top plate 1008 may be facilitated by respective internally molded beads at the upper and lower portion of the bellows 1002.

The sealed bellows 1002 forms a flexible chamber 1010 that confines a column of gas (e.g., air) between the top plate 1008 and the piston 1004. The top plate 1008 is operably coupled to one part of the vehicle or machine such as via suitable fastener(s) 1012. For example, the top plate 1008 may be operably coupled to a frame or subframe of a vehicle with at least mounting studs 1012 to support a load. The piston 1004 is operably coupled to another part of the vehicle or machine such as via suitable fastener(s) 1014. This may include operably coupling the piston 1004 via at least a rod 1014 or mounting stud(s) to a suspension assembly of the vehicle. The air spring 1000 so installed transmits most of the load from the top plate 1008 to the piston 1004 via the gas column confined in the chamber 1010, with the flexible bellows 1002 carrying only a portion of the load. The compressibility of the confined gas and its gas pressure provide a force1016 medium that serves as a spring as the bellows 1002 expands and contracts during use. As the flexible bellows 1002 deforms during such use, the lower portion of the bellows 1002 can roll along the outer surface of the piston 1004 to help distribute load and improve durability. Such a configuration allows the air spring 1002 to carry significant loads while also providing a desired elasticity for use in the suspension system.

The ability of the air spring 1000 to support a load is determined by its effective area, which is calculated by dividing the load on the air spring 1000 by the gas pressure in the chamber 1010 at any given position. The effective area is a function of the dimensions of the bellows 1002 and the volume of gas contained in the chamber 1010. For the illustrated rolling lobe air spring 1000, the dimensions of the piston 1004 also plays a role in determining effective area and load capacity. Whether the effective area remains constant, increases, or decreases during deflection will at least partially depend on the design of the air spring components. The spring rate of the air spring 1000 will at least partially be determined by changes in effective area and gas pressure as the air spring bellows 1002 is deflected, with pressure changing based on the speed and magnitude of deflection. For each unit of deflection, the pressure and spring rate may differ depending on isothermal, adiabatic, or polytropic conditions.

The air spring 1000 may be a locked-in system in which the mass of gas in the chamber 1010 is fixed. Alternatively, the air spring 1000 may be an active-air system in which the chamber 1010 is fluidly connected to a constant source of gas, such as via an air compressor onboard the vehicle, which enables dynamic adjustment of the mass of gas. The fluid connection may be made via a fluid passage in the top plate 1008, which in the illustrated embodiment a fluid passage 1015 is formed through at least one of the fastener(s) 1012. Such an active air system can permit the air spring 1000 to maintain a relatively constant volume at a given operating height regardless of static load or gas pressure. At a given height, the load-carrying ability and the spring rate are varied by changing the pressure of the confined gas via the fluid coupling to the gas source. This enables the air spring 1000 to provide an adjustable spring rate, adjustable load carrying ability, and adjustable height control.

In some embodiments, the air spring 1000 may include a bumper 1016 operably mounted atop the piston 1004 within the bellows chamber 1010. The internal bumper 1016 may be formed from an elastomeric material or other suitable polymer and serves as a cushion between the top plate 1008 and the bottom plate 1006 (or piston 1004) to prevent damage in the event of low or no gas pressure within the bellows chamber 1010 during operation.

The shape of the piston 1004 may influence the effective area of the air spring 1000 and thus its load handling capability. In the illustrated embodiment, the piston 1004 has an outer surface that is straight-sided at its upper region and which flares outwardly at its lower region. The bellows 1002 rolls over this outer surface of the piston 1004 during operation, and thus the effective area will increase as the bellows 1002 rolls over the flared lower region. The force to compress also increases as the piston flares out which restricts rapid compression and bottoming out. The piston 1004 may include a plurality of ribs 1017 that extend radially between its central hub 1018 and outer sidewall 1019 to provide structural support to the air spring 1000.

The flexible bellows 1002 of the air spring includes a multilayer main body including at least one elastomeric layer. In exemplary embodiments, the multilayer main body of the bellows 1002 may include at least one elastomeric inner layer, at least one elastomeric outer layer, and at least one reinforcement layer between the inner and outer layer(s). The elastomeric composition(s) of the inner and outer layers may be formed from any suitable elastomer and may have various additives of suitable types and amounts. This may include, but is not limited to, pigments and/or dyes to provide a color, retardants, antioxidants, vulcanizing agents, cure accelerators or other processing aids, reinforcing agents and fillers, such as carbon black, silica, other mineral fillers (e.g., calcium carbonate, talc, etc.), or the like.

The piston 1004 according to the present disclosure is at least partially formed from polyketone material. In exemplary embodiments, at least a majority of the overall polymer content of the main piston body (also referred to with 1004) is formed from polyketone material, and more particularly an entirety of the overall polymer content of the main piston body is formed from polyketone material. This may include all values and subranges between such values in the range between greater than 50% and 100%. In some embodiments, the piston 1004 may include non-polymer components coupled to or embedded in the main piston body, such as metal inserts that serve as bushings or embedded fastener receivers (e.g., threaded blind taps), and thus these non-polymer components would not be considered part of the overall polymer content of the main piston body that would be formed from polyketone material.

The main piston body 1004 may be a unitary (monolithic) body formed from polymer having a majority polyketone material, and more particularly an entirety of polyketone material forming the unitary main piston body. The unitary main piston body may be formed using suitable polymer molding techniques, such as injection molding. As such, at least a majority, and more particularly an entirety, of the injection moldable material of the main piston body may be formed from polyketone material.

The polyketone material of the main piston body may be a pure polymer without additives, or the polyketone material may contain one or more suitable additives. The base polymer matrix of the polyketone material includes polyketone polymer, which is a semi-crystalline thermoplastic material formed from the polymerization of carbon monoxide and olefin monomer(s) in the presence of a catalyst. This results in an aliphatic polymer chain of alternating ketone groups derived from the carbon monoxide and hydrocarbon segments from the olefin monomer(s). The polyketone polymer may be a copolymer derived from carbon monoxide and ethylene, or may be a terpolymer derived from carbon monoxide, ethylene and propylene. The propylene content of such terpolymer may be in a range from about 1-10 wt.%, for example, and the carbon monoxide to ethylene weight ratio may be about 1:1 for both the copolymer and terpolymer. An example of the resulting structure of the polyketone copolymer is shown as the chemical structure (i) and the structure of the polyketone terpolymer is shown as the chemical structure (ii) below. It is understood that the term copolymer as used herein means two or more polymers, and thus encompasses the term terpolymer.

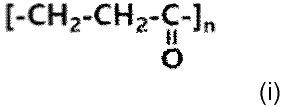

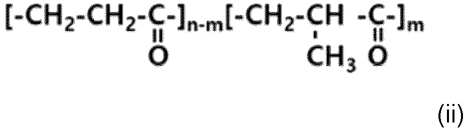

In exemplary embodiments, the polyketone material is a fiber-reinforced material that includes short fibers dispersed in the polyketone polymer matrix. The reinforcement fibers may be of any suitable material, such as carbon fiber, glass fiber, ceramic fiber, mineral fiber, synthetic or polymer fiber, or the like. The fiber length should be short enough to enable dispersion and molding (e.g., via injection molding) and long enough to provide a desired strength. As an example, the fiber length (e.g., glass fiber) may be in a range from about 0.1mm to about 10mm, more particularly from about 1.5mm to about 7mm, such as about 3mm to about 5mm, for example. The amount of fiber reinforcement (e.g., glass fiber) also should be provided to balance strength with processability. In exemplary embodiments, the amount of fiber (e.g., glass fiber) contained in the polyketone matrix is in a range from about 30 wt.% to about 40 wt.%, and more particularly about 35 wt.% (including all values between the range and all subranges between such values).

Additional additives also may be included in the polyketone material composition, such as in a total amount from about 0 wt.% to 10 wt.%, more particularly about 5 wt.% or less. This may include conventional reinforcing additives, such as carbon black, silicates, silica, talc, or the like. Additional polymers or elastomers also could be included in the above-mentioned range. The polyketone polymer will still constitute a majority of the base polymer matrix, and more particularly a majority of the overall content of the composition, such as at least 60 wt.%, 65 wt.%, 70 wt.%, 75 wt.%, or more polyketone polymer in the overall material forming the main piston body.

It is understood that the main piston body 1004, whether unitary or segmented, may include multiple types of polyketone material or may be formed entirely from a single type of polyketone material. For example, the strengthening ribs 1017 may be formed from one type of polyketone material having a different polyketone polymer variety and/or different fiber content than the polyketone material(s) of the central hub 1018 and/or outer sidewall 1019. Alternatively, an entirety of the main piston body 1004, whether unitary or segmented, may be formed from a single type of polyketone material. Therefore, reference to a polyketone material, or the polyketone material, means one or more polyketone material(s) unless specified otherwise such as by stating a single type of polyketone material.

The polyketone material forming the main piston body exhibits characteristics that make it suitable for use as an air spring main piston body, such as having sufficient burst strength, impact strength (at room temperature, elevated temperature or freezing), crush strength, and fatigue life. For example, the polyketone material forming the main piston body may have one or more of at least the following attributes: (i) burst test strength of resisting at least 21 bar of pressure around the piston; (ii) impact test strength of resisting at least 800 ft-lb of impact energy through the bumper to piston at room temperature (25C), -20C, -40C and 65C; (iii) top and center crush strength by resisting at least 98 kN through the shoulders of the piston and at least 196 kN through the center of the piston; and (iv) fatigue life by resisting at least 2 million cycles at different heights.

In exemplary embodiments, an injection moldable polyketone material having about 35 wt.% dispersed glass-fiber reinforcement and less than 10% other additives may have at least the following properties according to Table 1.

**Table 1:**

| **Property** | **Test Method** | **Unit** | **Value Range** | **Nominal Value (approx.)** |
|---|---|---|---|---|
| Density | ASTM D792 | g/cc | 1.45-1.55 | 1.50 |
| Tensile strength at break | ASTM D638 | MPa | 125-175 | 150 |
| Elongation at break | ASTMD638 | % | 3.0 - 4.0 | 3.5 |
| Flexural Strength | ASTM D790 | MPa | 170-210 | 195 |
| Flexural Modulus | ASTM D790 | MPa | 6000-8000 | 7000 |
| Charpy notched impact strength | ISO 179/1eA | kJ/m² | 10-20 | 15 |

An example of polyketone material that has been found to possess the properties in Table 1 and which satisfies conditions making it suitable for use as an air spring main piston body is Poketone M33AG7A-BK0 material produced by Hyosung of Korea. This material is a 35 wt.% glass fiber reinforced polyketone copolymer including ketone and methyl groups, which is UV stabilized and includes about 1% additives (including colorant), and which exhibits medium melt flow characteristics and is injection moldable.

Examples of the Poketone M33AG7A-BK0 polyketone material produced by Hyosung were tested against a conventional polyamide material used for conventional air spring piston bodies to determine its performance characteristics and suitability for use. The comparative polyamide material included 35% glass fiber reinforcement dispersed in a PA 6 polymer. The results are shown in Table 2.

**Table 2:**

| Piston | | | |
|---|---|---|---|
| Test | Specification | Nylon PA6 GF35 | Poketone PK GF35 |
| Burst Test | Min 21 bar | 41.7 bar | 43.1 bar |
| Life Test | Min 2 million cycles | 2 million | 2 million |
| Center Crush | Withstand 196KN | Pass | Pass |
| Top Crush | Withstand 98KN | Pass | Pass |
| Impact at - 20°C | Withstand an impact energy 1,089 Joules (800 lb-ft) | Pass | Pass |
| Impact at - 40°C | Withstand an impact energy 1,089 Joules (800 lb-ft) | Pass | Pass |

This data shows that the polyketone material tested meets or exceeds the performance of polyamide material and is suitable for use as an air spring main piston body.

It is understood that although a rolling lobe type air spring is shown and described, the air spring according to the present disclosure may be another suitable type. For example, the air spring may be sleeve type air spring in which the bellows is attached with external crimp ring(s) or clamp(s) instead of having internally molded beads in the bellows. The air spring also could be a crimp type air spring without a piston, in which the upper and/or bottom portions of the bellows is crimped or otherwise sealed with respective top and/or bottom plates. The bellows in such a crimp type design may be a single bellows or may be a convoluted bellows having multiple bellows sections with girdle ring(s) between the bellows sections. In such a design without a piston, the top and/or bottom plates may be formed from polyketone material instead of a different polymer or metal.

The foregoing description of the embodiments has been provided for purposes of illustration and description. Example embodiments are provided so that this disclosure will be sufficiently thorough, and will convey the scope to those who are skilled in the art. Numerous specific details are set forth such as examples of specific components, devices, and methods, to provide a thorough understanding of embodiments of the disclosure, but are not intended to be exhaustive or to limit the disclosure. It will be appreciated that it is within the scope of the disclosure that individual elements or features of a particular embodiment are generally not limited to that particular embodiment, but, where applicable, are interchangeable and can be used in a selected embodiment, even if not specifically shown or described. Thus, while a particular feature may have been described with respect to only one or more of several embodiments, such feature may be combined with one or more other features of the other embodiments, separately or in any combination. The same may also be varied in many ways. Such variations are not to be regarded as a departure from the disclosure, and all such modifications are intended to be included within the scope of the disclosure. as may be desired and advantageous for any given or particular application.

Any background information contained in this disclosure is to facilitate a better understanding of the various aspects described herein. It should be understood that any such background statements are to be read in this light, and not as admissions of prior art. Likewise, the description and examples are presented herein solely for the purpose of illustrating the various embodiments of the disclosure and should not be construed as a limitation to the scope and applicability of the disclosure.

An "operable connection," or a connection by which entities are "operably connected," is one in which the entities are connected in such a way that the entities may perform as intended. An operable connection may be a direct connection or an indirect connection in which an intermediate entity or entities cooperate or otherwise are part of the connection or are in between the operably connected entities. An operable connection also can include the entities being integral with each other or forming a unitary structure. An operable coupling, attachment, mounting, etc.; or an operative connection, coupling, attachment, mounting, etc., are synonymous with an operable connection unless stated otherwise.

The phrase "and/or" as used in this disclosure should be understood to mean "either or both" of the elements so conjoined, i.e., elements that are conjunctively present in some cases and disjunctively present in other cases. Other elements may optionally be present other than the elements specifically identified by the "and/or" clause, whether related or unrelated to those elements specifically identified unless clearly indicated to the contrary. Thus, as a non-limiting example, a reference to "A and/or B," when used in conjunction with open-ended language such as "comprising" can refer, in one embodiment, to A without B (optionally including elements other than B); in another embodiment, to B without A (optionally including elements other than A); in yet another embodiment, to both A and B (optionally including other elements); etc.

The word "or" as used in this disclosure should be understood as being inclusive and not exclusive. For example, when separating items in a list, "or" or "and/or" shall be interpreted as being inclusive, i.e., the inclusion of at least one, but also including more than one, of a number or list of elements, and, optionally, additional unlisted items. For example, a condition A or B is satisfied by anyone of the following: A is true (or present) and B is false (or not present), A is false (or not present) and B is true (or present), and both A and B are true (or present). Only terms clearly indicating exclusivity should be interpreted as indicating exclusive alternatives (i.e. "one or the other but not both"), such as "either," "only one of," or "exactly one of." In other words, such terms of exclusivity refer to the inclusion of exactly one element of a number or list of elements.

Any references to "one embodiment" or "an embodiment" as used herein is understood to mean that a particular element, feature, structure, or characteristic described in connection with the embodiment is included in at least one embodiment. The appearances of the phrase "in one embodiment" in various places in the specification are not necessarily referring to the same embodiment.

In addition, use of the "a" or "an" are employed to describe elements and components of the embodiments herein. This is done merely for convenience and to give a general sense of concepts according to the disclosure. This description should be read to include one or at least one and the singular also includes the plural unless otherwise stated.

The word "exemplary" is used herein to mean "serving as an example or illustration." Any aspect or design described herein as "exemplary" is not necessarily to be construed as preferred or advantageous over other aspects or designs. Likewise, the phrases "particularly," "preferably," or the like as used in this disclosure may refer to an element or value that provides advantage(s) in some embodiment(s), however is not intended to limit the scope of the disclosure to those "particular" or "preferable" features.

Transitional language such as "including," "comprising," "having," "containing," "involving," or variations thereof, is intended to be broad and encompass the subject matter listed thereafter, equivalents, and additional subject matter not recited, i.e., to be open-ended and meaning including but not limited to.

It is to be understood that terms such as "top," "bottom," "upper," "lower," "left," "right," "front," "rear," "forward," "rearward," or the like may refer to an arbitrary frame of reference, rather than to the ordinary gravitational frame of reference.

It is to be understood that all values, ranges, ratios or the like as described in this disclosure may be combined in any manner. In addition, it is to be understood that a concentration or amount or value range listed in this disclosure is intended to include any and every concentration or amount or value within the range, including the end points, as if each value within the range has been expressly stated. For example, "a range of from 1 to 10" is to be read as indicating each and every possible number along the continuum between about 1 and about 10. Thus, even if specific data points within the range, or even no data points within the range, are explicitly identified or refer to only a few specific data points, it is to be understood that the inventor(s) appreciate and understand that any and all data points within the range are to be considered to have been specified, and that inventor(s) had possession of the entire range and all points within the range.

In addition, each numerical value used in this disclosure should be read once as modified by the term "about" (unless already expressly so modified), and then read again as not so modified unless otherwise indicated in context. The term "about" as used herein refers to any value which lies within the range defined by a variation of up to ±10% of the stated value, for example, ±10%, ± 9%, ± 8%, ± 7%, ± 6%, ± 5%, ± 4%, ± 3%, ± 2%, ±1%, ±0.01%, or ±0.0% of the stated value, as well as values intervening such stated values. When the term "about" is used in describing a value or an end-point of a range, the disclosure should be understood to include the specific value or end-point referred to.

The term "consisting essentially of" in relation to a composition is to indicate that substantially (e.g., greater than 95 weight % or greater than 99 weight %) of the component(s) present in the composition is the component(s) recited. Therefore, this term does not exclude the presence of minor additives or impurities as would be understood by those having ordinary skill in the art.

Although the invention has been shown and described with respect to a certain embodiment or embodiments, it is apparent that equivalent alterations and modifications will occur to those having ordinary skill in the art upon the reading and understanding this disclosure, and such modifications are intended to be included within the scope of this disclosure as defined in the claims. In particular regard to the various functions performed by the above described elements (components, assemblies, devices, compositions, etc.), the terms (including a reference to a "means") used to describe such elements are intended to correspond, unless otherwise indicated, to any element which performs the specified function of the described element (i.e., that is functionally equivalent), even though not structurally equivalent to the disclosed structure which performs the function in the herein illustrated exemplary embodiment or embodiments of the disclosure.

## Claims

1. An air spring comprising:
a piston, and
a bellows operably attached to the piston,
the piston having a main piston body,
wherein at least a majority of an overall polymer content of the main piston body is formed from at least one polyketone material.

2. The air spring according to claim 1, wherein an entirety of the overall polymer content of the main piston body is formed from the at least one polyketone material.

3. The air spring according to claim 1, or any other preceding claim, wherein the at least one polyketone material is a fiber-reinforced polyketone polymer matrix material.

4. The air spring according to claim 3, or any other preceding claim, wherein the at least one polyketone material includes glass fibers dispersed in the polyketone polymer matrix.

5. The air spring according to claim 3, or any other preceding claim, wherein the polyketone polymer matrix is a copolymer of carbon monoxide and ethylene; or a terpolymer of carbon monoxide, ethylene, and propylene.

6. The air spring according to claim 3, or any other preceding claim, wherein the polyketone polymer matrix constitutes at least 60 wt.% of the polyketone material.

7. The air spring according to claim 4, or any other preceding claim, wherein the at least one polyketone material includes 30 wt.% to 40 wt.% fiber reinforcement, more particularly fiber reinforcement having a length in a range from 0.1mm to 10mm;
more particularly the fiber reinforcement being glass fiber reinforcement dispersed in the polyketone polymer matrix.

8. The air spring according to claim 7, or any other preceding claim, wherein the at least one polyketone material includes 35 wt.% fiber reinforcement, more particularly glass fiber reinforcement dispersed in the polyketone polymer matrix, more particularly the glass fiber having a length in a range from 1mm to 7mm, more particularly 4mm.

9. The air spring according to claim 1, or any other preceding claim, wherein the at least one polyketone material is injection moldable.

10. The air spring according to claim 1, or any other preceding claim, wherein the main piston body is unitary and formed from a single type of polyketone material.

11. The air spring according to claim 1, or any other preceding claim, wherein the at least one polyketone material forming the main piston body has one or more of at least the following properties:
| **Property** | **Test Method** | **Unit** | **Value Range** | **Nominal Value (approx.)** |
|---|---|---|---|---|
| Density | ASTM D792 | g/cc | 1.45-1.55 | 1.50 |
| Tensile strength at break | ASTM D638 | MPa | 125-175 | 150 |
| Elongation at break | ASTMD638 | % | 3.0 - 4.0 | 3.5 |
| Flexural Strength | ASTM D790 | MPa | 170-210 | 195 |
| Flexural Modulus | ASTM D790 | MPa | 6000-8000 | 7000 |
| Charpy notched impact strength | ISO 179/1eA | kJ/m² | 10-20 | 15 |

12. An air spring comprising:
a flexible bellows having a multilayer main body including an inner elastomeric layer, and outer elastomeric layer and a reinforcement layer between the inner and outer elastomeric layers;
a piston operably attached the flexible bellows, the piston having a main piston body;
a lower plate sealingly attaching a lower portion of the flexible bellows to the main piston body;
an upper plate sealingly attached to an upper portion of the flexible bellows;
wherein the main piston body is a unitary construction formed from a single type of polyketone material, the polyketone material being an injection moldable fiber-reinforced polyketone polymer matrix composite comprising: at least 60% polyketone polymer and between 30% to 40% glass fiber reinforcement dispersed in the polyketone polymer matrix.

13. The air spring according to claim 12 wherein the upper plate and/or the lower plate are formed from polyketone material.

14. The air spring according to claim 12, wherein a bumper is mounted to the piston inside of the flexible bellows, the bumper being formed from polyketone material.

15. The air spring according to any of claims 13-14 in combination with the features of any of claims 2-12.
